# EUROPÄISCHE PATENTSCHRIFT

(11) **EP 3 636 559 B1**
(45) Veröffentlichungstag und Bekanntmachung des Hinweises auf die Patenterteilung: **07.06.2023**
(21) Anmeldenummer: 19193348.0
(22) Anmeldetag: 23.08.2019
(51) Int. Cl.: B65D 21/02, B65D 1/22, B65D 25/22, B65G 1/04

(54) **STAPELBARE KISTE**
STACKABLE BOX
BOÎTE EMPILABLE

(30) Priorität: 19.09.2018 AT 2912018
(43) Veröffentlichungstag der Anmeldung: 15.04.2020
(73) Patentinhaber: FRIES PLANUNGS- UND MARKETINGGESELLSCHAFT m.b.H., 6832 Sulz (AT)
(72) Erfinder: Grabher, Markus, 6890 Lustenau (AT)
(74) Vertreter: Torggler & Hofmann Patentanwälte - Rankweil

(56) Entgegenhaltungen:
- EP-A1- 2 484 599
- KR-A- 20010 096 923
- US-A1- 2018 029 798

## Beschreibung

Die vorliegende Erfindung betrifft eine stapelbare Kiste gemäß des Oberbegriffs des Patentanspruchs 1, und ein Verfahren gemäß dem Oberbegriff des Anspruchs 9.

Kisten dieser Art sind dazu vorgesehen, dass sie nicht nur von Hand angehoben und umgelagert werden können, sondern auch die Möglichkeit besteht, die Kiste mit einem maschinellen Greifer zu greifen, um sie anzuheben, zu transportieren oder in anderer Art und Weise zu bewegen. Für das maschinelle Greifen wurden beim Stand der Technik spezielle Kisten und auch spezielle Greifeinrichtungen entwickelt. In der Literatur werden diese Kisten auch als Kleinladungsträger, Kleinlastträger, Eurokisten, Euronormbehälter, Euronormboxen und dergleichen bezeichnet. Die Greifeinrichtungen zum maschinellen Greifen der Kisten sind jeweils an die speziellen Kisten angepasst. Es gibt Kisten und diesen zugeordnete Greifeinrichtungen, welche an den Außenseiten der Seitenwände angreifen. Es gibt auch Kisten, bei denen die Adapter in der Seitenwand als Ausnehmungen bzw. Löcher ausgebildet sind, in die die Greifeinrichtung zum maschinellen Greifen der Kiste eingreifen können.

Ein Nachteil des Standes der Technik ist, dass bei den meisten bislang bekannten stapelbaren Kisten immer nur eine einzelne Kiste mittels der Greifeinrichtung maschinell gegriffen werden kann.

Die EP 2 484 599 A1 und die KR 2001 009 6923 A offenbaren zwar stapelbare Kisten mit vertikal in den Ecken der Seitenwände verlaufenden Kanälen. Es handelt sich in beiden Entgegenhaltungen aber nicht um Kisten, die mittels entsprechenden Greifeinrichtungen maschinell gegriffen werden sollen. In der EP 2 484 599 A1 dienen die in den Ecken der Seitenwände angeordneten Kanäle zum Einbringen von Säulen, die der Verbesserung der Stapelbarkeit der Kisten dienen. In der KR 2001 009 6923 A sind die Seitenwände der Kiste gegenüber dem Boden klappbar ausgebildet. Die Kanäle in den Eckbereichen der Seitenwände dienen der Befestigung der Seitenwände aneinander, indem dort ein entsprechender Stift eingeführt wird.

Gattungsgemäßer Stand der Technik ist aus der US 2018/0029798 A1 bekannt, die eine Kiste und ein Verfahren gemäß den Oberbegriffen der Ansprüche 1 und 9 offenbart. Diese Schrift zeigt stapelbare Kisten mit entsprechenden Kanälen in den Seitenwänden, wobei bei aufeinandergestapelten Kisten Greifeinrichtungen in diese Kanäle eingeführt werden können, um so mehrere Kisten gleichzeitig anheben und umsetzen zu können. In der US 2018/0029798 A1 hintergreifen die Greifeinrichtungen einen oberen Rand der jeweils untersten Kiste eines Kistenstapels.

Die Aufgabe der Erfindung ist es, eine alternative stapelbare Kiste zur Verfügung zu stellen, bei der die Kiste einzeln aber auch ein Stapel von solchen Kisten maschinell mittels einer Greifeinrichtung gegriffen werden kann.

Zur Lösung dieser Aufgabe wird eine stapelbare Kiste gemäß Patentanspruch 1 vorgeschlagen.

Bei Kisten gemäß der Erfindung können somit die Greifeinrichtungen zum maschinellen Greifen der einzelnen Kiste und auch eines Stapels oder eines Teils eines Stapels von solchen Kisten durch die Eintrittsöffnung, den Kanalinnenhohlraum und die Austrittsöffnung des jeweiligen Kanals in der Seitenwand der Kiste bzw. im Fall des Stapels oder des Teils des Stapels der Kisten hindurchgeführt werden. Hierdurch kann eine einzelne Kiste maschinell gegriffen werden, um sie dann anzuheben, zu transportieren oder in anderer Art und Weise zu bewegen. Bei entsprechend in Stapelrichtung aufeinandergestapelten Kisten können die Greifeinrichtungen aber auch jeweils durch mehrere miteinander fluchtend ausgerichtete Kanäle der verschiedenen übereinander gestapelten Kisten hindurchgeführt werden, sodass gleichzeitig zwei oder mehr Kisten maschinell mittels der Greifeinrichtungen gegriffen werden können. Hierdurch ist es möglich, gleichzeitig mehrere aufeinandergestapelte Kisten zu greifen, um sie dann anzuheben, zu transportieren oder anderweitig zu bewegen. Die Greifeinrichtungen können hierzu, wie an sich bekannt, an entsprechenden Industrierobotern oder anderen Hebeeinrichtungen wie Kränen und dergleichen befestigt sein. Die Erfindung erlaubt es auch, eine verschiedene Anzahl von aufeinander gestapelten Kisten entsprechend gleichzeitig maschinell zu greifen. Vor allem ist es möglich, auch nur einen Teil der Kisten eines Kistenstapels maschinell zu greifen, indem man die Greifeinrichtungen eben nur durch die Kanäle derjenigen Kisten hindurchführt, welche gegriffen werden sollen. Hierdurch ist die Möglichkeit geschaffen worden, eine beliebige Anzahl von Kisten in einem Greifvorgang, also gleichzeitig, maschinell zu greifen.

Neben der stapelbaren Kiste an sich betrifft die Erfindung auch eine Anordnung von aufeinandergestapelten erfindungsgemäßen Kisten, bei der vorgesehen ist, dass zumindest zwei der Kanäle jeweils einer der Kisten mit jeweils einem Kanal der jeweils darunter und/oder darüber angeordneten Kiste zum Hindurchführen der Greifeinrichtungen fluchtend angeordnet sind.

Ein Verfahren zum maschinellen Greifen von aufeinandergestapelten erfindungsgemäßen Kisten sieht vor, dass zumindest zwei Greifeinrichtungen jeweils durch die miteinander fluchtend angeordneten Kanäle der aufeinandergestapelten Kisten hindurchgeführt werden. Günstigerweise ist dann weiters vorgesehen, dass die Greifeinrichtungen jeweils, vorzugsweise nur, in der untersten der gemeinsam zu greifenden, aufeinandergestapelten Kisten form- und/oder reibschlüssig lösbar fixiert werden. Ist dies geschehen, so können die Kisten des Stapels gleichzeitig maschinell gehoben und transportiert bzw. anderweitig bewegt werden. Genausogut kann aber eine einzelne Kiste gegriffen und angehoben, transportiert usw. werden.

Erfindungsgemäße stapelbare Kisten könnten auch als Transport- und/oder Lagerkisten oder allgemein als Behälter oder Transportbehälter bezeichnet werden. Auch wenn sie zum maschinellen Greifen mittels zumindest einer Greifeinrichtung konzipiert sind, können sie günstigerweise natürlich auch von Hand gegriffen und transportiert werden.

Der Begriff des maschinellen Greifens ist in seiner allgemeinen Bedeutung dahingehend zu verstehen, dass es darum geht, dass eine Kiste mittels einer Greifeinrichtung physisch so kontaktiert wird, dass sie im maschinell gegriffenen, also in anderen Worten maschinell kontaktierten oder maschinell angefassten Zustand mit den Greifeinrichtungen angehoben, transportiert oder in anderer Art und Weise bewegt werden kann.

Erfindungsgemäße stapelbare Kisten können in sehr unterschiedlichen Bereichen eingesetzt werden. Grundsätzlich ist es denkbar, solche stapelbaren Kisten zur Lagerung, zum Waschen und zum Transport von Geschirr, Gläsern und dergleichen einzusetzen. Besonders bevorzugt kommen solche maschinell greifbaren erfindungsgemäßen stapelbaren Kisten aber im industriellen Umfeld zum Einsatz, um entsprechende, in der Industrie zu bearbeitende, zu fertigende oder gefertigte Gegenstände zu lagern, zu transportieren, zu waschen und dergleichen. Die Mindesttraglast erfindungsgemäßer stapelbarer Kisten liegt günstigerweise bei zumindest 10 kg, besonders bevorzugt bei 25 kg pro Kiste. Je nach Einsatzgebiet können erfindungsgemäße stapelbare Kisten auch sehr unterschiedlich dimensioniert sein. Bevorzugt handelt es sich um Kisten mit einer rechteckigen oder quadratischen Grundform. Bezogen auf die Außenmaße liegt die Länge der Kiste günstigerweise im Bereich von 10 cm bis 120 cm, vorzugsweise von 25 cm bis 65 cm, und ihre Breite im Bereich von 10 cm bis 100 cm, vorzugsweise 25 cm bis 45 cm. Die Höhe der Kiste liegt bei bevorzugten Varianten im Bereich von 3 cm bis 25 cm, vorzugsweise von 4 cm bis 15 cm.

Erfindungsgemäße Kisten können aus unterschiedlichen Materialien oder Materialzusammensetzungen bestehen. Es kann sich um Metallkisten aber auch um Kunststoffkisten handeln. Sogar Holz- oder Verbundwerkstoffkisten sind denkbar. Bevorzugt ist jedenfalls vorgesehen, dass die stapelbare Kiste einstückig ausgebildet ist. Dies bedeutet dann auch, dass die Seitenwand und der Boden dann einstückig miteinander verbunden sind und aus demselben Material bestehen. Z.B. kann es sich bei erfindungsgemäßen Kisten um solche aus einem geeigneten Kunststoff wie z.B. Polypropylen (PP), Polyamid (PA), Polyoxymethylen (POM) oder Polybutylenterephtalat (PBT) handeln. Erfindungsgemäße Kisten können z.B. im Spritzgussverfahren hergestellt werden.

Erfindungsgemäße Kisten weisen einen Boden auf, welcher den Aufnahmeraum der Kiste, in den die Gegenstände eingelegt werden können, zusammen mit der umlaufenden Seitenwand begrenzt. Üblicherweise wird die Kiste mit dem Boden so auf den Untergrund gestellt, dass die Gegenstände im Aufnahmeraum auf dem Boden aufliegen. Der Boden bildet also in der Regel die Auflagefläche für die Gegenstände im Aufnahmeraum der Kiste. Zu den Seiten hin ist der Aufnahmeraum von der umlaufenden Seitenwand der Kiste begrenzt. Die Seitenwand kann dabei in sich geschlossen den Boden vollständig umgeben. Sie kann aber auch aus mehreren Bestandteilen, welche unterbrochen sind, ausgeführt sein. Auch dann kann es sich noch um eine umlaufende Seitenwand handeln. Sowohl die Seitenwand als auch der Boden können als in sich geschlossene Flächen ausgebildet sein. Es ist aber genauso gut möglich, im Boden und/oder in der Seitenwand gitterförmige Strukturen, also Durchbrechungen, Fenster, Verstärkungsrippen und dergleichen vorzusehen. In bevorzugten Ausgestaltungsformen setzt sich die umlaufende Seitenwand aus Eckbereichen und zwischen den Eckbereichen verlaufenden, vorzugsweise geraden, Seitenwandabschnitten zusammen. Die Seitenwand kann in bevorzugten Ausgestaltungsformen in einer Draufsicht auf die Kiste eine rechteckige Grundform aufweisen. Der Begriff rechteckig ist dabei nicht nur im strengen mathematischen Sinn zu verstehen. Er schließt auch Ausgestaltungsformen mit ein, bei denen die Seitenwandabschnitt zwar grundsätzlich in einem rechten Winkel im Eckbereich zusammenlaufen, der Eckbereich selbst aber dennoch Abrundungen und dergleichen aufweist, usw.

Erfindungsgemäße Kisten sind jedenfalls so ausgebildet, dass sie in einer Stapelrichtung gemeinsam mit anderen Kisten des gleichen Typs aufeinander gestapelt werden können. Die Stapelrichtung ist dabei, wie beim Stand der Technik an sich bekannt, in der Regel durch die Form der Kiste bzw. ihres Bodens und ihrer Seitenwand vorgegeben. Z.B. kann der Boden über die Seitenwand überstehen, sodass dieser überstehende Bereich des Bodens einer Kiste in den oberen Bereich des Aufnahmeraums der darunter stehenden Kiste also in den Bereich, welcher von der Seitenwand umgeben wird, hineingestellt werden kann, sodass der Boden der oberen Kiste zu den Seiten hin formschlüssig von der Seitenwand der unteren Kiste gehalten ist. Hierdurch ergibt sich auch automatisch die entsprechende Stapelrichtung, in der die Kisten aufeinander gestapelt werden müssen. Bei Kisten mit mehreren möglichen Stapelrichtungen müssen die erfindungsgemäßen Merkmale bezüglich zumindest einer Stapelrichtung realisiert sein, damit es sich um eine erfindungsgemäße Kiste handelt.

Bei bevorzugten Ausgestaltungsformen erfindungsgemäßer Kisten ist vorgesehen, dass der Boden eine obere, insbesondere ebene Begrenzungsfläche ausbildet, mit der er den Aufnahmeraum begrenzt. Die Stapelrichtung verläuft dann günstigerweise normal zu dieser oberen Begrenzungsfläche des Bodens. In anderen Worten bildet die Stapelrichtung dann eine Flächennormale auf diese obere Begrenzungsfläche des Bodens. In einer Betriebsstellung der Kiste begrenzt die obere Begrenzungsfläche des Bodens den Aufnahmeraum der Kiste nach unten, während die Seitenwand den Aufnahmeraum in dieser Stellung der Kiste zu den Seiten hin, also in Richtungen horizontal, begrenzt. Die Begrenzungsfläche wird dabei von der Oberseite des Bodens aufgespannt. Dies gilt auch, wenn der Boden gitterförmig oder dergleichen ausgebildet ist. Die obere, insbesondere ebene, Begrenzungsfläche ist die Fläche, auf der in der Betriebsstellung die in der Kiste im Aufnahmeraum gelagerten Gegenstände aufliegen. Die Stapelrichtung wird bei der Definition der Erfindung hier an mehreren Stellen als Referenzrichtung herangezogen. Als Alternative zur Stapelrichtung könnte als geometrische Referenz auch die genannte obere, insbesondere ebene, Begrenzungsfläche des Bodens herangezogen werden, wobei dann davon auszugehen wäre, dass die Stapelrichtung eine Flächennormale auf diese obere Begrenzungsfläche des Bodens bildet, also allseitig orthogonal auf der oberen Begrenzungsfläche des Bodens steht.

Erfindungsgemäße Kisten können nach oben, also auf der vom Boden abgewandten Seite der Seitenwand offen sein. In anderen Worten weisen solche Kisten einen nach oben offenen Aufnahmeraum auf. Grundsätzlich können erfindungsgemäße stapelbare Kisten aber natürlich auch mit einem Deckel auf der, dem Boden gegenüberliegenden Seite des Aufnahmeraums verschlossen werden, indem man einen entsprechenden Deckel auf dieser Seite einer Seitenwand anbringt.

Weitere Merkmale und Einzelheiten bevorzugter Ausgestaltungsformen der Erfindung werden beispielhaft in der nachfolgenden Figurenbeschreibung anhand von Ausführungsbeispielen der Erfindung erläutert. Dabei ist darauf hinzuweisen, dass die einzelnen bevorzugten Merkmale zwar in Kombination miteinander in den Ausführungsbeispielen gezeigt sind. Dies bedeutet aber nicht, dass diese bevorzugten Merkmale bei der Realisierung der Erfindung immer in dieser Kombination vorkommen müssen. Es zeigen:
- Fig. 1: zwei aufeinander gestapelte erfindungsgemäße Kisten eines ersten Ausführungsbeispiels der Erfindung in einer Seitenansicht;
- Fig. 2: einen Vertikalschnitt entlang der Schnittlinie AA aus Fig. 1;
- Fig. 3: eine Draufsicht auf den Kistenstapel gemäß Fig. 1;
- Fig. 4: den Bereich B aus Fig. 3 vergrößert;
- Fig. 5: den Schnitt entlang der Schnittlinie CC aus Fig. 4;
- Fig. 6: den Schnitt durch die Seitenwand entlang der Schnittlinie DD aus Fig. 4;
- Fig. 7: den Schnitt durch die Seitenwand entlang der Schnittlinie EE auf Fig. 4;
- Fig. 8: die beiden Kisten aus Fig. 1, wobei Greifeinrichtungen in die Kanäle der Kisten eingeführt sind;
- Fig. 9: Eine Ansicht von unten auf die Situation gemäß Fig. 8 und
- Fig. 10 und 11: Schnittdarstellungen analog zur Schnittlinie CC aus Fig. 4, wobei die gezeigte Greifeinrichtung jeweils zum Greifen einer verschiedenen Anzahl von Kisten in die Kanäle eingeführt ist;
- Fig. 12: eine perspektivische Ansicht auf eine der Kisten des Kistenstapels in Fig. 1 von schräg oben;
- Fig. 13: diese Kiste aus Fig. 12 in einer Schrägansicht auf den Boden;
- Fig. 14: diese Kiste aus Fig. 12 in einer Draufsicht;
- Fig. 15: den Bereich F aus Fig. 14 vergrößert;
- Fig. 16: den Schnitt entlang der Schnittlinie GG aus Fig. 15;
- Fig. 17: den Bereich L aus Fig. 16 vergrößert;
- Fig. 18: den Schnitt entlang der Schnittlinie HH aus Fig. 15;
- Fig. 19: den Schnitt entlang der Schnittlinie KK aus Fig. 15;
- Fig. 20: eine alternative Ausgestaltungsform einer erfindungsgemäßen Kiste bei der auch in den Seitenwandabschnitten Kanäle vorgesehen sind;
- Fig. 21: einen Vertikalschnitt entlang der Schnittlinie MM aus Fig. 20;
- Fig. 22: einen Eckbereich einer erfindungsgemäßen Kiste bei der abweichend von vorab geschilderten Ausführungsbeispielen der Kanal nicht umfangsgeschlossen ausgeführt ist;
- Fig. 23 und 24: verschiedene Schnittdarstellungen zu möglichen Ausgestaltungsformen des Kanalinnenhohlraums;
- Fig. 25 und 26: ein weiteres Ausführungsbeispiel der Erfindung in einer Ansicht von schräg oben und in einer Ansicht schräg auf den Boden der Kiste;
- Fig. 27 und 28: Schnitte durch die Seitenwand der Kiste gemäß Fig. 25 und 26 im aufeinandergestapelten Zustand zweier solcher Kisten und
- Fig. 29 und 30: eine Darstellung analog zu den Fig. 27 und 28 für eine weitere alternative Ausgestaltungsform.

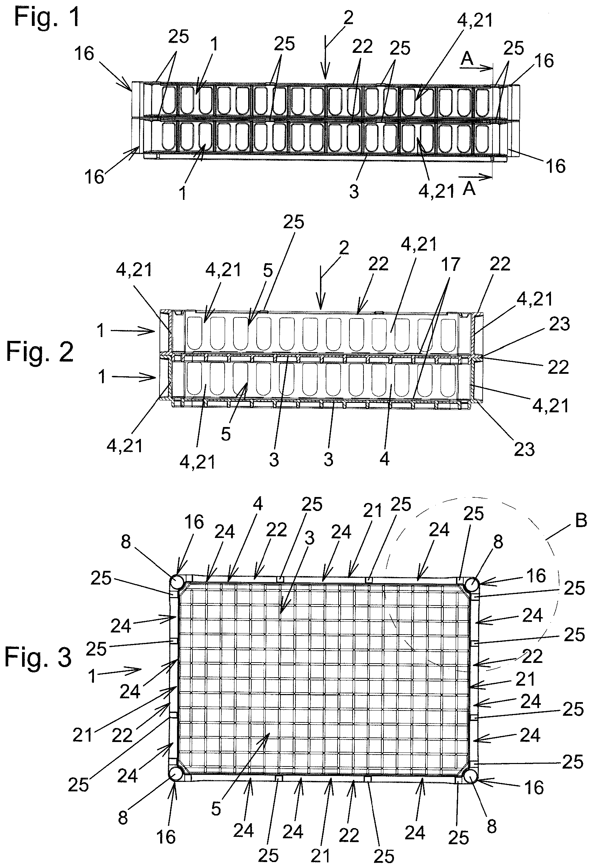

Nachfolgend wird zunächst auf das erste Ausführungsbeispiel der Erfindung eingegangen, welches in den Fig. 1 bis 19 dargestellt ist. Die nachfolgende Beschreibung der weiteren Ausführungsbeispiele konzentriert sich dann auf die Unterschiede zum ersten Ausführungsbeispiel.

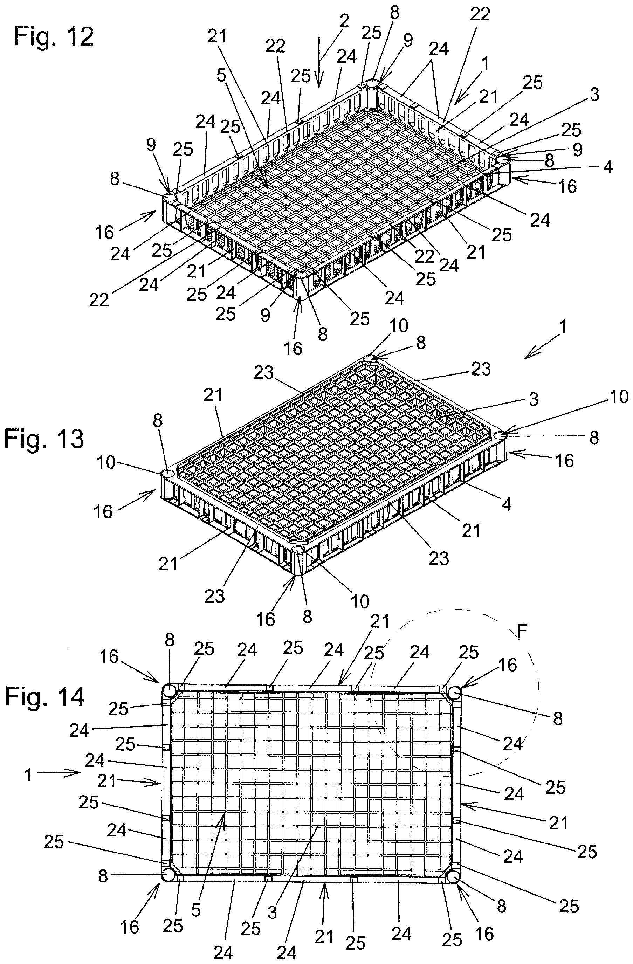

Die erfindungsgemäße Kiste 1 des ersten Ausführungsbeispiels ist in den Fig. 1 bis 11 in der Stapelrichtung 2 auf eine andere erfindungsgemäße Kiste 1 des gleichen Typs aufgestapelt. Die Fig. 12-19 zeigen diese Kiste 1 des ersten Ausführungsbeispiels einzeln bzw. Teilbereiche davon.

Die Kiste 1 weist einen Boden 3 und eine über den Boden 3 parallel zur Stapelrichtung 2 überstehende und in diesem Ausführungsbeispiel vollständig um den Boden 3 umlaufend ausgebildete Seitenwand 4 auf. Der Boden 3 und die Seitenwand 4 begrenzen gemeinsam den Aufnahmeraum 5 der Kiste 1, welcher zur Aufnahme der Gegenstände in der Kiste vorgesehen ist. In der Betriebsstellung, wie sie z.B. in den Fig. 1 und 2 dargestellt ist, gesehen, wird der Aufnahmeraum 5 nach unten hin von einer oberen, hier ebenen Begrenzungsfläche 17 des Bodens 3 begrenzt. Die Stapelrichtung 2 bildet eine Flächennormale zu dieser oberen Begrenzungsfläche 17 des Bodens 3. In anderen Worten verläuft die Stapelrichtung 2 normal zur oberen Begrenzungsfläche 17 des Bodens 3. Die Stapelrichtung 2 ist auch in diesem Ausführungsbeispiel dadurch vorgegeben, dass zum Aufeinanderstapeln der Kisten 1 der Boden 3 der jeweils oberen Kiste 1 in den oberen Bereich des von der Seitenwand 4 umgebenen Aufnahmeraums 5 der jeweils unteren Kiste 1 eingeführt werden muss. Wie dies z.B. in Fig. 2 gut zu sehen ist, ergibt sich daraus ein Formschluss in Richtung orthogonal zur Stapelrichtung 2. Dies hat zur Folge, dass die Kisten 1 zum Aufeinanderstapeln in der Stapelrichtung 2 aufeinandergestellt werden müssen und zum Abstapeln die jeweils obere Kiste bzw. Kisten 1 entgegen der Stapelrichtung 2 von der jeweils unteren Kiste bzw. Kisten 1 abgehoben werden muss bzw. müssen. Wie eingangs bereits erläutert, können sowohl der Boden 3 als auch die Seitenwand 4 als in sich geschlossene Flächen ausgebildet sein. In diesem Ausführungsbeispiel ist dies nicht der Fall. Hier weisen sowohl der Boden 3 als auch die Seitenwände 4 jeweils Durchbrechungen bzw. Öffnungen auf. Der Boden 3 ist in diesem Ausführungsbeispiel von einer gitterförmigen Struktur gebildet. Die Seitenwand 4 weist eine Vielzahl von fensterartigen Öffnungen auf. All dies ist natürlich nur beispielhaft dargestellt und kann auch in anderen an sich bekannten Arten und Weisen ausgeführt sein. Vor allem können, so weit für den jeweils beabsichtigten Einsatzzweck notwendig, auch Verstärkungsrippen und dergleichen sowohl am Boden 3 als auch an der Seitenwand 4 ausgebildet sein. Die hier gezeigten Kisten 1 weisen eine rechteckige Grundform mit vier, in diesem Ausführungsbeispiel abgerundet ausgebildeten Eckbereichen 16 auf. Zwischen den Eckbereichen 16 verlaufen jeweils Seitenwandabschnitte 21. In den hier gezeigten Ausführungsvarianten ist die jeweils vollständig um den Boden 3 umlaufende Seitenwand 4 somit aus den vier Eckbereichen 16 und den jeweils dazwischen verlaufenden, vorzugsweise geraden, Seitenwandabschnitten 21 gebildet. Natürlich sind auch erfindungsgemäße Kisten 1 mit nicht rechteckförmiger sondern anders ausgestalteter Grundform denkbar und möglich. Die hier realisierten, bevorzugten Seitenwandabschnitte 21 sind in sich jeweils gerade bzw. linear ausgebildet. Sie treffen in einem orthogonalen Winkel in den Eckbereichen 16 jeweils auf einen benachbarten Seitenwandabschnitt 21. Auch dies muss natürlich nicht so sein. Z.B. kann die Zahl der Eckbereiche 16 und die Anzahl und Form der Seitenwandabschnitte 21 natürlich auch anders ausgebildet sein.

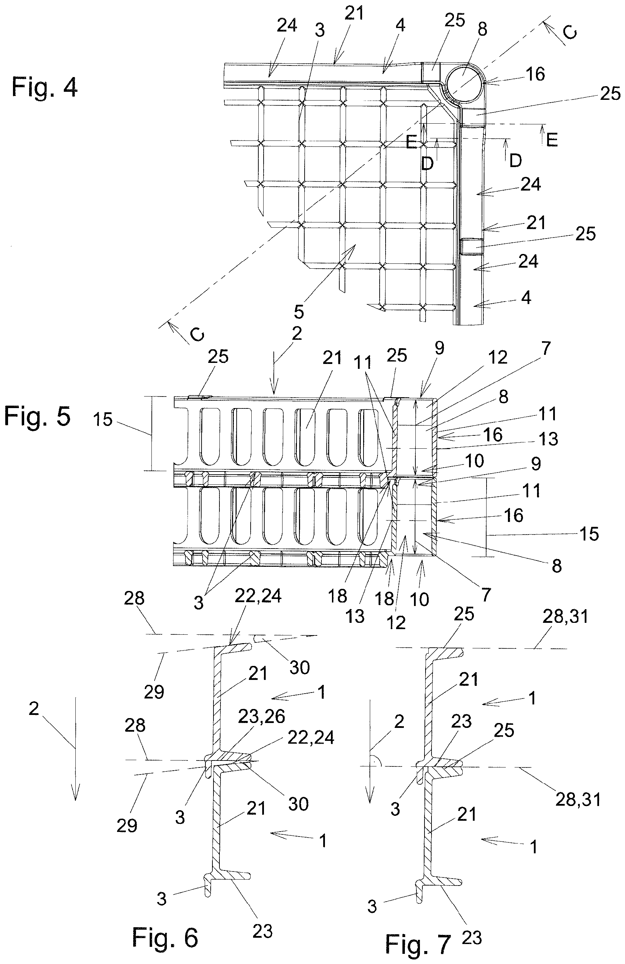

Die Kisten 1 sind mit voneinander distanziert angeordneten Adaptern zum maschinellen Greifen der Kiste 1 mittels zumindest einer Greifeinrichtung 6 ausgebildet. Erfindungsgemäß sind die Adapter in der Seitenwand 4 jeweils als in einer parallel zur Stapelrichtung 2 verlaufenden Längserstreckungsrichtung 7 längserstreckte Kanäle 8 ausgebildet, wobei die Kanäle 8 jeweils eine Eintrittsöffnung 9 und eine Austrittsöffnung 10 und dazwischen einen von einer Kanalbegrenzungswand 11 der Kiste 1 begrenzten und in der jeweiligen Längserstreckungsrichtung 7 längserstreckten Kanalinnenhohlraum 12 zum Hindurchführen der Greifeinrichtung 6 durch die Eintrittsöffnung 9 und den Kanalinnenhohlraum 12 und die Austrittsöffnung 10 aufweisen. Die Kanalbegrenzungswand 11 ist günstigerweise, wie hier auch realisiert, jeweils als ein Teilbereich der Seitenwand 4 ausgebildet. In bevorzugten Ausgestaltungsformen ist, wie hier auch im ersten Ausführungsbeispiel gezeigt, vorgesehen, dass die Kanalbegrenzungswand 11 den Kanalinnenhohlraum 12 umfangsgeschlossen begrenzt. Umfangsgeschlossen bedeutet dabei, dass die Kanalbegrenzungswand 11 den Kanalinnenhohlraum 12 über einen Umfangswinkel von 360° umgibt. Dies ist bezüglich des ersten Ausführungsbeispiels gut in den Fig. 3, 4, 9, 12 bis 14 und 15 zu sehen. Die umfangsgeschlossene Ausbildung sieht man auch in einer Schnittebene 13 normal zur Stapelrichtung 2. Solche Schnittebenen 13 sind beispielhaft in Fig. 5 eingezeichnet. Günstigerweise sind die Kanäle 8, wie im ersten Ausführungsbeispiel auch gezeigt, jeweils in einem Eckbereich 16 der Seitenwand 4 ausgebildet. Im Sinne eines stabilen Greifens der Kiste 1 bzw. gestapelten Kisten 1 sind günstigerweise in jeder Kiste bzw. deren Seitenwand 4 zumindest zwei Kanäle 8 ausgebildet. Bevorzugte Ausgestaltungsformen sehen vor, dass in der Seitenwand 4 zumindest vier, vorzugsweise genau vier, Kanäle 8 angeordnet sind.

Die in der Seitenwand 4 bzw. in bevorzugten Ausgestaltungsformen in den Eckbereichen 16 angeordneten Kanäle 8 dienen dazu, dass eine entsprechende Greifeinrichtung 6 durch sie hindurchgeführt werden kann, sodass die entsprechend ausgebildete Greifeinrichtung 6 die Eintrittsöffnung 9, den Kanalinnenhohlraum 12 und die Austrittsöffnung 10 des jeweiligen Kanals 8 durchdringen kann. Die Form der Greifeinrichtung und die Form des Kanals 8 sollten hierzu aufeinander abgestimmt sein, wobei grundsätzlich verschiedene Formgebungen denkbar und möglich sind. Bevorzugt ist vorgesehen, dass der Kanalinnenhohlraum 12 des jeweiligen Kanals 8 zumindest abschnittsweise einen kreisrunden Querschnitt aufweist, wie dies in dem hier gezeigten ersten Ausführungsbeispiel auch der Fall ist. Dies sieht man beim ersten Ausführungsbeispiel z.B. an der Form der Eintrittsöffnung 9 und auch an der Form der Austrittsöffnung 10 und auch in einem entsprechenden Schnitt durch den jeweiligen Kanal 8 in einer Schnittebene 13 normal zur Stapelrichtung 2. Der Kanal 8 erstreckt sich bevorzugt mit seiner Längserstreckungsrichtung 7 über die gesamte oder zumindest einen Großteil der Höhenerstreckung 15 der Seitenwand 4 im Bereich des jeweiligen Kanals 8 in einer Richtung parallel zur Stapelrichtung 2. In diesem Sinne ist günstigerweise vorgesehen, dass die Seitenwand 4 im Bereich des jeweiligen Kanals 8 eine Höhenerstreckung 15 in einer Richtung parallel zur Stapelrichtung 2 aufweist und sich der Kanal 8 über zumindest 50%, vorzugsweise über zumindest 80%, dieser Höhenerstreckung 15 der Seitenwand 4 erstreckt. In Fig. 5 ist besonders gut zu sehen, dass sich der Kanal 8 in diesem ersten Ausführungsbeispiel über praktisch die gesamte Höhenerstreckung 15 der Seitenwand 4 erstreckt. Günstig ist es auch wenn die Längserstreckung des jeweiligen Kanals 8 in seiner Längserstreckungsrichtung zumindest, vorzugsweise doppelt, so groß ist wie der Durchmesser der Eintrittsöffnung 9 oder der Austrittsöffnung 10. Im Zweifel ist hierbei auf den größten dieser Durchmesser abzustellen.

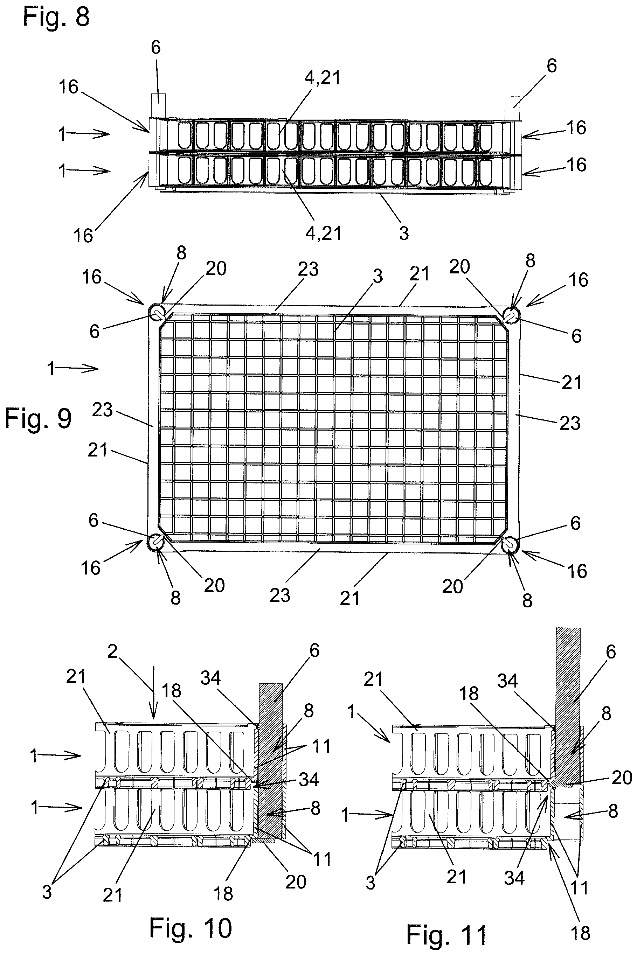

In einer Anordnung von aufeinandergestapelten erfindungsgemäßen Kisten 1 ist günstigerweise vorgesehen, dass die, vorzugsweise zumindest zwei der, Kanäle 8 jeweils einer der Kisten 1 jeweils mit einem Kanal 8 der jeweils darunter und/oder darüber angeordneten Kiste 1 zum Hindurchführen einer Greifeinrichtung 6 fluchtend angeordnet sind. Dies ist gut in den Fig. 5, 10 und 11 zu sehen, wobei in Fig. 5 keine Greifeinrichtung 6 gezeigt ist, während in Fig. 10 die Greifeinrichtung 6 durch die beiden übereinander und miteinander fluchtend angeordneten Kanäle 8 der aufeinandergestapelten Kisten 1 hindurchgeführt ist und in Fig. 11 die Greifeinrichtung 6 nur durch den Kanal 8 der oberen Kiste 1 hindurchgeführt ist.

Damit die jeweilige Greifeinrichtung 6 ungehindert durch die entsprechenden Kanäle 8 der aufeinandergestapelten Kisten 1 hindurchgeführt werden kann, sehen bevorzugte Ausgestaltungsformen der vor, dass die Kiste 1, vorzugsweise vollkommen, frei von die jeweilige Eintrittsöffnung 9 und die jeweilige Austrittsöffnung 10 des jeweiligen Kanals 8 in seiner jeweiligen Längserstreckung 7, insbesondere vollständig, verdeckenden Wandbereichen ist. In anderen Worten ist somit günstigerweise zumindest vorgesehen, dass die Kiste 1 keine Wandbereiche aufweist, welche die Eintrittsöffnung 9 und die Austrittsöffnung 10 des jeweiligen Kanals 8 vollständig verdecken. Hierdurch ist sichergestellt, dass die Greifeinrichtung 6 ungehindert durch die Kanäle 8 der aufeinandergestapelten Kisten 1 hindurchgeführt werden kann. Günstigerweise ist dabei vorgesehen, dass die Kiste vollkommen frei von solchen die Eintrittsöffnung 9 und die Austrittsöffnung 10 des jeweiligen Kanals auch nur teilweise verdeckenden Wandbereichen ist. Der Vollständigkeit halber wird allerdings darauf hingewiesen, dass bei entsprechender Ausgestaltungsform der Greifeinrichtung 6 die Eintrittsöffnung 9 und die Austrittsöffnung 10 teilweise verdeckende Wandbereiche möglich wären, wenn die Greifeinrichtung 6 an diesen vorbeigeführt und durch die Eintrittsöffnung 9 und die Austrittsöffnung 10 des jeweiligen Kanals 8 noch hindurchgeführt werden kann.

Zum maschinellen Greifen von aufeinandergestapelten erfindungsgemäßen Kisten 1 sieht ein bevorzugtes Verfahren vor, dass zumindest zwei Greifeinrichtungen 6 jeweils durch die miteinander fluchtend angeordneten Kanäle 8 der aufeinandergestapelten Kisten 1 hindurchgeführt werden und die Greifeinrichtungen 6 jeweils, vorzugsweise nur in der untersten gemeinsam zu greifenden, der aufeinandergestapelten Kisten 1 form- und/oder reibschlüssig lösbar fixiert werden. In anderen Worten ist also günstigerweise vorgesehen, dass die Greifeinrichtung 6 zum Greifen einer gewissen Anzahl von aufeinandergestapelten Kisten 1 nicht jede einzelne dieser Kisten 1 form- und/oder reibschlüssig fixiert, sondern, vereinfacht gesprochen, diese lösbare Fixierung nur an der untersten Kiste 1 der aufeinandergestapelten zu greifenden Anzahl von Kisten 1 form- und/oder reibschlüssig erfolgt. Beim Anheben dieser untersten Kiste 1 des Plattenstapels mittels der Greifeinrichtung 6 werden dann die darüber angeordneten Kisten 1 des Kistenstapels automatisch mit angehoben. Zur lösbaren Fixierung der Kiste 1 bzw. der untersten Kiste 1 des abzuhebenden Kistenstapels kann die Greifeinrichtung 6 in verschiedenen Arten und Weisen form- und/oder reibschlüssig am jeweiligen Kanal 8 der Kiste 1 angreifen. Z.B. ist es denkbar, dass die Greifeinrichtung 6 innerhalb des genannten Kanals 8 in ihrem Durchmesser z.B. durch entsprechende Druckpolster oder dergleichen vergrößert wird. Es ist ein formschlüssiges lösbares Fixieren der jeweiligen Greifeinrichtung 6 im oder am jeweiligen Kanal 8 der entsprechenden Kiste 1 vorgesehen, wie dies stark schematisiert in den Fig. 8 bis 11 auch gezeigt ist. Die dort gezeigte Variante der Greifeinrichtung 6 weist einen in Richtung orthogonal zur Stapelrichtung 2 verschiebbaren Riegel 20 auf, welcher in einen entsprechenden Hinterschnitt 18 in und/oder an der Kanalbegrenzungswand 11 eingreifen kann. In diesem Zusammenhang ist vorgesehen, dass in und/oder an der Kanalbegrenzungswand 11 des jeweiligen Kanals 8 zumindest ein Hinterschnitt 18 zur Ausbildung eines in Längserstreckungsrichtung 7 des Kanals 8 wirkenden Formschlusses mit der Greifeinrichtung 6 ausgebildet ist. In den Fig. 5, 10 und 11 ist gut zu sehen, dass dieser Hinterschnitt 18 im Bereich der Austrittsöffnung 10 des jeweiligen Kanals 8 ausgebildet sein kann. In der gezeigten Variante kann dieser Hinterschnitt 18 der entsprechenden Kiste vom entsprechend ausgefahrenen Riegel 20 formschlüssig hintergriffen werden. Um entsprechenden Platz für den Riegel 20 zu schaffen, ist bei dieser Variante mit dem Hinterschnitt 18 im Bereich der Eintrittsöffnung 9 des jeweiligen Kanals 8 eine Freistellung 34 eingearbeitet, die den nötigen Platz zum Einführen des Riegels 20 schafft. Zum formschlüssigen Hintergreifen des jeweiligen Hinterschnitts 18 wird der Riegel 20 relativ zur Greifeinrichtung 6 ausgefahren, so wie dies in den Fig. 10 und 11 gut zu sehen ist. Wenn die jeweilige Greifeinrichtung 6 hingegen in den oder die Kanäle 8 eingefahren oder aus diesem bzw. diesen wieder herausgezogen werden soll, wird der Riegel 20 in eine hier nicht dargestellte zurückgezogene Position verstellt, in der er in Richtung orthogonal zur Stapelrichtung 2 bzw. zur Längserstreckungsrichtung 7 der Kanäle 8 nicht über die Greifeinrichtung 6 übersteht, sodass er in dieser Position nicht mit den Kanalbegrenzungswänden 11 der Kanäle 8 kollidiert und die Greifeinrichtung 6 entsprechend in die entsprechende Anzahl von Kanälen 8 eingeführt oder aus diesen herausgezogen werden kann.

Diese Technologie erlaubt es, eine gewünschte Anzahl von aufeinandergestapelten Kisten 1 maschinell und gleichzeitig mit der entsprechenden Anzahl von Greifeinrichtungen 6 zu greifen, indem man die Greifeinrichtungen 6 entsprechend tief in die miteinander fluchtenden Kanäle 8 der aufeinandergestapelten Kisten 1 einführt, dann die unterste der gewünschten Anzahl von Kisten 1 entsprechend form- und/oder kraftschlüssige lösbar fixiert, um dann den so gegriffenen Stapel an Kisten 1 entsprechend anzuheben, transportieren und/oder in anderer Art und Weise zu bewegen. Die Greifeinrichtungen 6 können dabei von an sich bekannten Hebevorrichtungen, Robotern, Kränen oder dergleichen bewegt werden. In Fig. 10 ist beispielhaft gezeigt, wie die Greifeinrichtung 6 mittels ihres Riegels 20 die unterste der beiden Kisten 1 formschlüssig greift, sodass die beiden in Fig. 10 gezeigten, aufeinandergestapelten Kisten 1 gemeinsam von der Greifeinrichtung 6 maschinell gegriffen sind. In Fig. 11 hingegen ist die Greifeinrichtung 6 nur in den Kanal 8 der oberen Kiste 1 eingefahren und in dessen Hinterschnitt 18 formschlüssig verriegelt, sodass in Fig. 11 nur die obere Kiste 1 des dargestellten Kistenstapels maschinell gegriffen wird. Auch wenn dies in den hier beigelegten Figuren nur für einen Stapel mit zwei Kisten 1 beispielhaft gezeigt ist, kann diese Technologie natürlich für das Greifen einer nahezu beliebigen Anzahl von aufeinandergestapelten Kisten 1 in entsprechender Art und Weise realisiert werden. Dabei kann ein ganzer Stapel aber auch nur ein Teil eines Stapels von Kisten 1 maschinell gegriffen werden.

In den Fig. 8 und 9 ist in einer Seitenansicht und in einer Ansicht von unten die Situation gemäß Fig. 10 gezeigt, in der beide Kisten 1 gleichzeitig von den Greifeinrichtungen 6 maschinell gegriffen werden.

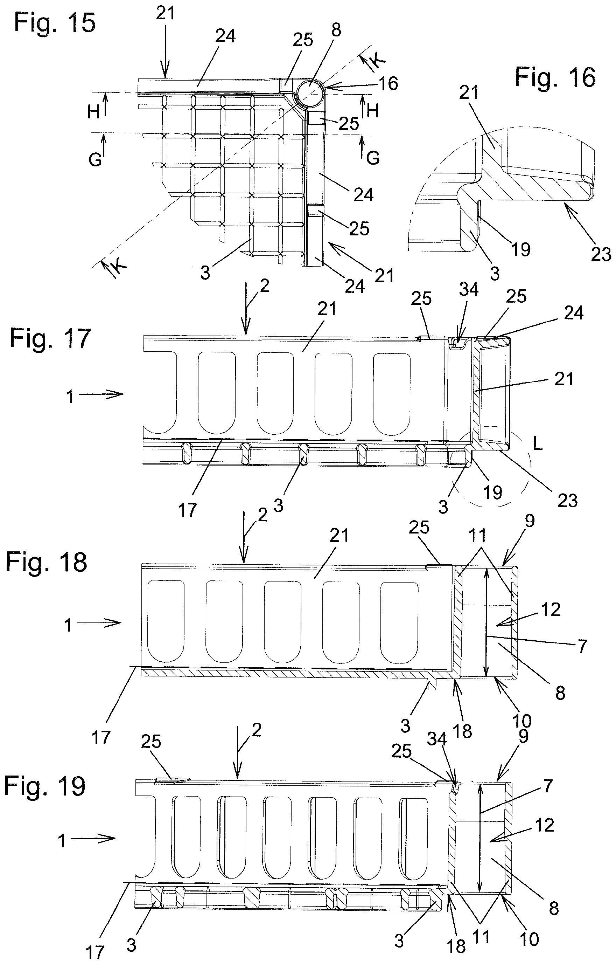

Die Fig. 12, 13 und 14 zeigen eine einzelne der aufeinandergestapelten Kisten 1 der vorherigen Figuren. Fig. 12 zeigt eine Ansicht von schräg oben in den Aufnahmeraum 5. Fig. 13 zeigt eine Ansicht von schräg oben auf die umgedrehte Kiste, also auf deren Boden 3. Fig. 14 zeigt eine Ansicht von oben auf die Kiste 1. Das Detail F aus Fig. 14 ist in Fig. 15 gezeigt. In Fig. 15 sind die Schnittlinien GG, HH und KK eingezeichnet. Fig. 16 zeigt den Schnitt entlang der Schnittlinie GG. Fig. 17 zeigt den Bereich L aus Fig. 16 vergrößert. Dort ist die vorzugsweise keilförmig ausgebildete Ausrichtungsfläche 19 zu sehen, welche in diesem Ausführungsbeispiel an einer Außenseite des Bodens 3 angeformt ist. Beim Aufeinanderstapeln der Kisten 1 sorgt diese Ausrichtungsfläche 19 für eine Ausrichtung bzw. Zentrierung der aufgestapelten Kiste relativ zueinander, indem beim Aufstapeln in Stapelrichtung 2 der Boden 3 der jeweiligen Kiste 1, wie in Fig. 2 zu sehen, in den oberen Bereich des Aufnahmeraums 5 der darunter stehenden Kiste 1 eindringt und mit dem oberen Rand der Seitenwand 4 der unteren Kiste 1 in Wechselwirkung kommt. Durch die Ausrichtungsflächen 19, welche entsprechend verteilt an der Kiste 1 bzw. deren Boden 3 angeordnet sind, werden die aufeinandergestapelten Kisten 1 in Horizontalrichtung, also in Richtung normal bzw. orthogonal zur Stapelrichtung 2 so miteinander ausgerichtet, dass die Kanäle 8 der übereinandergestapelten Kisten 1 miteinander fluchten. Allgemein gesprochen sehen bevorzugte Ausführungsvarianten der Erfindung somit vor, dass an der Kiste 1, vorzugsweise keilförmig ausgebildete, Ausrichtungsflächen 19 zur miteinander fluchtenden Ausrichtung der Kanäle 8 von übereinandergestapelten Kisten 1 relativ zueinander ausgebildet sind. Der Vollständigkeit halber wird darauf hingewiesen, dass entsprechende Ausrichtungsflächen 19 natürlich auch anders ausgeformt und an anderen Stellen der jeweiligen Kiste 1 ausgebildet sein können. Z.B. ist es denkbar, die Ausrichtungsflächen 19 nicht am Boden 3 sondern an den entsprechenden Bereichen des oberen Randes der Seitenwand 4 anzuordnen, sodass sie beim Aufeinanderstapeln der Kisten 1 in Stapelrichtung 2 entsprechend mit dem Boden 3 der darüber gestapelten Kiste 1 zusammenwirken und eine entsprechende Ausrichtung der Kanäle 8 der übereinandergestapelten Kisten 1 sicherstellen.

In Fig. 19 ist noch einmal gut die als Hinterschnitt 18 dienende untere Austrittsöffnung 10 und die entsprechende Freistellung 34 im Bereich der Eintrittsöffnung 9 für den Riegel 20 zu sehen. Zu den Begriffen der Eintrittsöffnung 9 und der Austrittsöffnung 10 wird darauf hingewiesen, dass es sich hier letztendlich nur um Öffnungen des Kanals 8 bzw. die entsprechenden Enden des Kanalinnenhohlraums 12 handelt. Der Begriff der Eintrittsöffnung 9 und der Austrittsöffnung 10 wurde zur sprachlichen Vereinfachung gewählt. Die Eintrittsöffnung ist die Öffnung des Kanals 8, bei der eine Greifeinrichtung 6 von oben kommend in den Kanal 8 eingeschoben wird. Die Austrittsöffnung 10 wurde so benannt, da beim Einschieben der Greifeinrichtung 6 in den Kanal 8 von oben die Greifeinrichtung 6, wenn sie durch den Kanal 8 hindurchgeschoben ist, bei der Austrittsöffnung 10 aus dem Kanal 8 wieder austritt. Beim Herausziehen der Greifeinrichtung 6 aus dem Kanal 8 müsste man streng genommen die Eintrittsöffnung 9 und die Austrittsöffnung 10 andersherum benennen. Hierauf wird im Sinne einer sprachlichen Vereinfachung aber verzichtet. Man könnte die Eintrittsöffnung 9 auch als erste Öffnung und die Austrittsöffnung 10 auch als zweite Öffnung bezeichnen.

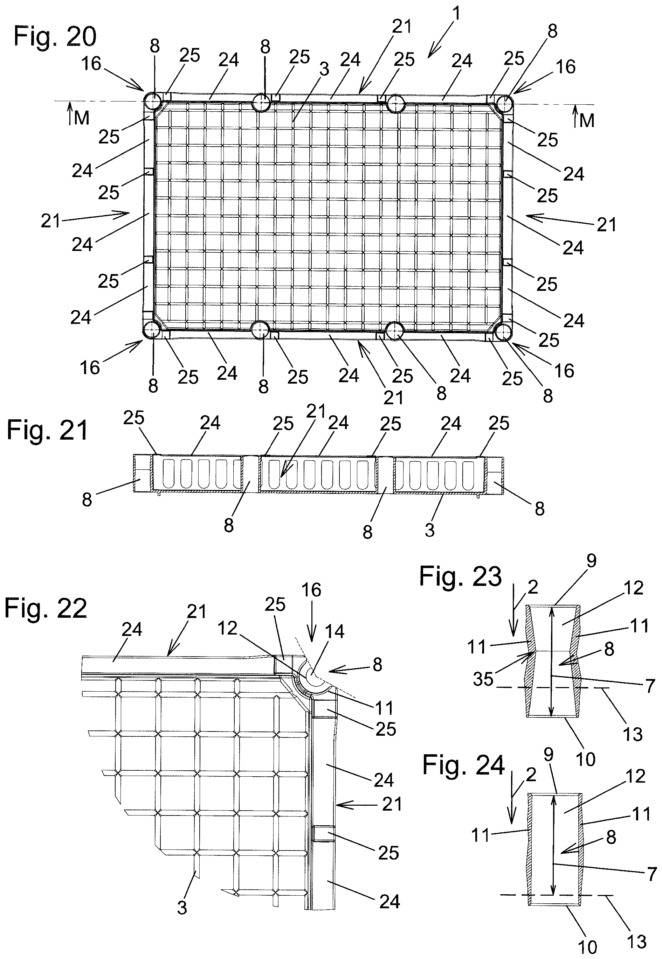

In den Fig. 20 und 21 ist ein zweites Ausführungsbeispiel einer erfindungsgemäßen Kiste 1 gezeigt, bei der zusätzlich zu den vier in den Eckbereichen 16 angeordneten Kanälen 8 in den längeren Seitenwandabschnitten 21 zusätzliche Kanäle 8 angeordnet sind. Fig. 20 zeigt dabei eine Draufsicht und Fig. 21 den Schnitt entlang der Schnittlinie MM aus Fig. 20. Dies dient der Veranschaulichung, dass die Kanäle 8 nicht zwingend in Eckbereichen 16 der Kiste 1 angeordnet sein müssen. Es soll veranschaulicht werden, dass die Kanäle 8 auch in anderen Bereichen der Seitenwand 4 angeordnet sein können, eben auch im Bereich der zwischen den Eckbereichen 16 angeordneten Seitenwandabschnitte 21. Der Vollständigkeit halber wird darauf hingewiesen, dass die Eckbereiche 16 auch ganz ohne Kanäle 8 ausgebildet sein können, wenn die Kanäle 8 dann eben entsprechend in anderen Bereichen der Seitenwand 4 realisiert sind.

Fig. 22 zeigt einen Eckbereich 16 einer Kiste 1, bei der der Kanal 8 nicht umfangsgeschlossen ausgebildet ist. In anderen Worten wird in diesem Ausführungsbeispiel der Erfindung der Kanalinnenhohlraum 12 nicht umfangsgeschlossen, also mit einem Umfangswinkel von 360° von der Kanalbegrenzungswand 11 begrenzt. In solchen Ausgestaltungsformen ist es aber günstig, wenn die Kanalbegrenzungswand 11 den Kanalinnenhohlraum 12, insbesondere in einer Schnittebene 13 normal zur Stapelrichtung 12 gesehen, zumindest abschnittsweise über einen Umfangswinkel 14 von zumindest 180° begrenzt. Dies ist in Fig. 22 der Fall, wie dies der eingezeichnete Umfangswinkel 14 zeigt.

Die Fig. 23 und 24 dienen der Veranschaulichung verschiedener Möglichkeiten, wie ein insbesondere umfangsgeschlossener Kanal 8 bzw. dessen Kanalbegrenzungswand 11 und dessen Kanalinnenhohlraum 12 ausgebildet sein können. Bei beiden Varianten ist zwar vorgesehen, dass der Kanalinnenhohlraum 12 des jeweiligen Kanals 8 überall, in einer entsprechenden Schnittebene 13 normal zur Stapelrichtung 2 gesehen, einen kreisrunden Querschnitt aufweist. In der erfindungsgemäßen Variante gemäß Fig. 23 ist der Kanalinnenhohlraum 12 aber durch zwei sich in einem Einschnürungsbereich 35 treffenden Kegelstümpfen ausgebildet, während der Kanalinnenhohlraum 12 in der Variante gemäß Fig. 24 , die kein Teil der Erfindung ist, durchgehend eine Kreiszylinderform aufweist. Der Einschnürungsbereich 35 in der Variante gemäß Fig. 23 kann z.B. dazu dienen, eine entsprechend ausgebildete Greifeinrichtung 6 im jeweiligen Kanal 8 formschlüssig lösbar zu fixieren. Der Einschnürungsbereich 35 ist somit eine andere Möglichkeit, den bereits oben diskutierten Hinterschnitt 18 zu realisieren.

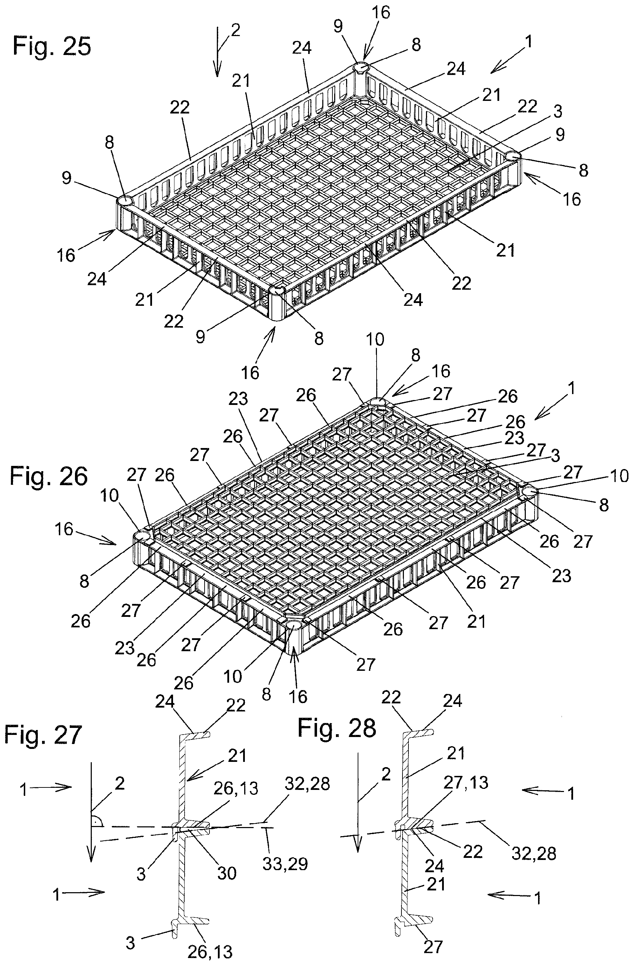

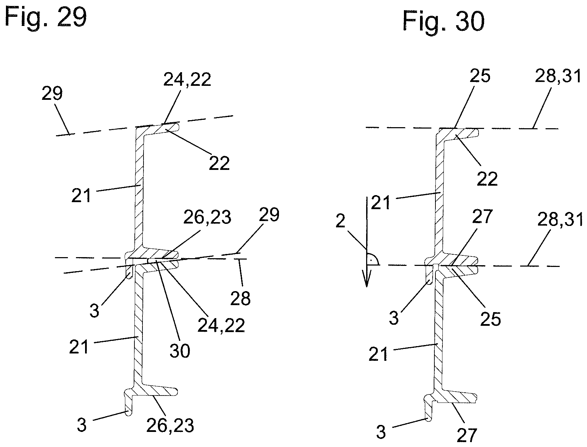

Um die erfindungsgemäße Kiste 1 dahingehend weiter zu verbessern, dass sie einerseits mit großen Traglasten bzw. schweren Gegenständen im Aufnahmeraum 5 gestapelt und andererseits aber auch mit gut trocknenden Seitenwandabschnitten 21 ausgerüstet ist, ist bei den stapelbaren Kisten 1 günstigerweise vorgesehen, dass die Seitenwand 4 in einer Draufsicht auf die Kiste 1 eine, vorzugsweise rechteckige, Grundform mit, vorzugsweise vier, Eckbereichen 16 und zwischen den Eckbereichen 16 verlaufenden Seitenwandabschnitten 21 aufweist, wobei die zwischen den Eckbereichen 16 verlaufenden Seitenwandabschnitte 21 jeweils von einer zumindest bereichsweise schräg zur Stapelrichtung 2 geneigten Oberseite 22 des Seitenwandabschnitts 21 und einer dazu gegenüberliegend angeordneten Unterseite 23 des Seitenwandabschnitts 21 begrenzt sind, wobei an den Seitenwandabschnitten 21 auf den Oberseiten 22 der Seitenwandabschnitte 21 jeweils benachbart zu zumindest einem schräg zur Stapelrichtung 2 geneigten Bereich 24 der jeweiligen Oberseite 22, vorzugsweise zwischen jeweils zwei dieser schräg geneigten Bereiche 24 der jeweiligen Oberseite 22, über diesen bzw. diese schräg geneigten Bereiche 24 überstehende Aufstandsflächen 25 und/oder auf den Unterseiten 23 der Seitenwandabschnitte 21 über jeweils zumindest einen dazu benachbarten Bereich 26, vorzugsweise zwei dazu benachbarte Bereiche 26, der jeweiligen Unterseite 23 überstehende Aufstandsflächen 27 ausgebildet sind. Zur Veranschaulichung und weiteren Erläuterungen hierzu bevorzugter Ausgestaltungsmöglichkeiten ist dies in verschiedenen Varianten in den verschiedenen Ausführungsbeispielen dieser Erfindung realisiert. Im ersten Ausführungsbeispiel gemäß der Fig. 1 bis 19 sowie in den Abwandlungsformen gemäß der Fig. 20 bis 22 sind die Aufstandsflächen 25 ausschließlich an den Oberseiten 22 der Seitenwandabschnitte 21 ausgebildet. Das Ausführungsbeispiel gemäß der Fig. 25 bis 28 hingegen zeigt beispielhaft eine Variante, bei der die Aufstandsflächen 27 ausschließlich an den Unterseiten 23 der Seitenwandabschnitte 21 ausgebildet sind. Die Fig. 29 und 30 zeigen Abbildungen zu einer Mischform, bei der sowohl Aufstandsflächen 25 an den Oberseiten 22 als auch Aufstandsflächen 27 an der jeweiligen Unterseite 23 des jeweiligen Seitenwandabschnitts 21 ausgebildet sind.

Beim ersten Ausführungsbeispiel wird insbesondere auf die Fig. 4, 6 und 7 verwiesen. Fig. 6 zeigt den Schnitt entlang der Schnittlinie DD aus Fig. 4 durch die Seitenwandabschnitte 21 der aufeinandergestapelten Kisten 1 und damit in einem Bereich außerhalb der Aufstandsflächen 25. Fig. 7 hingegen zeigt den Schnitt entlang der Schnittlinie EE aus Fig. 4 und damit den Bereich, in dem die auf der jeweiligen Oberseite 22 des Seitenwandabschnitts 21 ausgebildeten Aufstandsflächen 25 der jeweils unteren Kiste 1 die Unterseiten 23 der darüber angeordneten Kiste 1 abstützen.

Es handelt sich somit um ein erstes Beispiel einer Anordnung von aufeinandergestapelten erfindungsgemäßen Kisten 1, bei der vorgesehen ist, dass die Unterseiten 23 der Seitenwandabschnitte 21 der jeweils oberen Kiste 1 ausschließlich im Bereich der Aufstandsflächen 25 auf den Oberseiten 22 der Seitenwandabschnitte 21 der jeweils unteren Kiste 1 aufliegen. Hierdurch wird, wie hier auch realisiert, günstigerweise erreicht, dass die schräg zur Stapelrichtung 2 geneigten Bereiche 24 der jeweiligen Oberseiten 22 der Seitenwandabschnitte 21 der unteren Kiste 1 beabstandet von den darüber angeordneten Bereichen der Unterseiten 23 der Seitenwandabschnitte 21 der jeweils oberen Kiste 1 angeordnet sind. In dem in Fig. 6 dargestellten Schnitt ist die beabstandete Anordnung der Unterseite 23 der jeweils oberen Kiste 1 von dem geneigten Bereich 24 der Oberseite 22 des Seitenwandabschnitts 21 der unteren Kiste 1 gut zu sehen. Es entsteht somit zwischen der jeweiligen Unterseite 23 und dem geneigten Bereich 24 der jeweiligen Oberseite 22 ein Luftspalt. In Kombination mit der schrägen Ausführung der geneigten Bereiche 24 relativ zur Stapelrichtung 2 wird dadurch erreicht, dass die Oberseiten 22 der Seitenwandabschnitte 21 der jeweiligen Kiste 1 besonders schnell und gut abtrocknen können.

Der Begriff schräg ist bei der Beschreibung der Erfindung dahingehend zu verstehen, dass es sich um einen Winkel, vorzugsweise spitzen Winkel, handelt, welcher weder ein rechter Winkel ist, noch mit einer Parallelen zusammenfällt. Bevorzugt schließen in diesem wie auch in anderen erfindungsgemäßen Ausführungsbeispielen die schräg zur Stapelrichtung 2 geneigten Bereiche 24 der jeweiligen Oberseite 22 des jeweiligen Seitenwandabschnitts 21 mit der Stapelrichtung einen spitzen Winkel in einem Bereich von 5° bis 15°, vorzugsweise von 7° bis 10°, ein.

Fig. 7 und damit der Schnitt entlang der Schnittlinie EE aus Fig. 4 zeigt, wie die Aufstandsflächen 25, welche über die schräg geneigten Bereiche 24 auf der Oberseite 22 des Seitenwandabschnitts 1 überstehen, die darüber angeordnete Unterseite 23 des Seitenwandabschnitts 21 der darüber angeordneten Kiste 1 vollflächig abstützen, sodass bei einer entsprechenden Anzahl von Aufstandsflächen 25 die Kisten auch hohe Traglasten aufnehmen können.

In diesem wie auch in anderen bevorzugten Ausgestaltungsformen der Erfindung sind die Aufstandsflächen 25 bzw. 27 die einzigen Bereiche der gesamten Seitenwand 4, in denen sich die übereinandergestapelten Kisten 1 aufeinander abstützen. Dies bedeutet, dass in bevorzugten Ausgestaltungsformen die aufeinander gestapelten Kisten 1 sich in den Eckbereichen 16 nicht berühren und in diesen Eckbereichen 16 damit auch nicht aufeinander abgestützt sind.

Beim Vergleich der Fig. 6 und 7 ist gut zu sehen, dass in bevorzugten Ausgestaltungsformen der Erfindung die Aufstandsflächen 25 in einer ersten Ebene 28 angeordnet sind und die dazu jeweils benachbarten Bereiche 24 der jeweiligen Oberseiten 22 in einer zweiten Ebene 29 angeordnet sind, wobei die erste Ebene 28 und die zweite Ebene 29 einen spitzen Winkel 30 miteinander einschließen. Um dies zu verdeutlichen, ist die in Fig. 7 eingezeichnete erste Ebene 28 der Aufstandsfläche 25 in Fig. 6 nochmals eingetragen. In diesem Ausführungsbeispiel ist in Fig. 7 auch gut zu sehen, dass in bevorzugten Varianten der Erfindung die an den Oberseiten 22 ausgebildeten Aufstandsflächen 25 in einer normal zur Stapelrichtung 2 angeordneten Ebene 31 verlaufen.

Nimmt man nun Bezug auf das Ausführungsbeispiel gemäß der Fig. 25 bis 28, bei dem die Aufstandsflächen 27 ausschließlich an den Unterseiten 23 der jeweiligen Seitenwandabschnitte 21 ausgebildet sind, so zeigen die Fig. 27 und 28 analoge Schnitte zu Fig. 6 und 7. Fig. 27 zeigt einen Schnitt in einem Bereich, in dem sich keine Aufstandsfläche 27 befindet. Auch hier sind dadurch die schräg verlaufenden Bereiche 24 der jeweiligen Oberseite 22 der Seitenwandabschnitte 21 der jeweils unteren Kiste 1 beabstandet von den jeweiligen Unterseiten 23 der Seitenwandabschnitte 21 der darüber gestapelten Kiste 1. Der hierdurch entstehende, in Fig. 27 gut sichtbare Luftspalt fördert wiederum das Abtrocknen der Ober- und Unterseiten der Seitenwandabschnitte.

In Fig. 28 sieht man einen Schnitt durch die Seitenwandabschnitte 21 der aufeinandergestapelten Kisten 1 im Bereich der an den jeweiligen Unterseiten 23 der Seitenwandabschnitte 21 angeformten Aufstandsflächen 27. Dass diese über die jeweils dazu benachbarten Bereiche 26 überstehen, ist in Fig. 26 gut zu sehen. Auch in diesem Ausführungsbeispiel ist es so, dass die Aufstandsflächen 27 in einer ersten Ebene 28 angeordnet sind und die dazu jeweils benachbarten Bereiche 26 der Unterseiten 23 der jeweiligen Unterseite 23 in einer zweiten Ebene 29 angeordnet sind, wobei die erste Ebene 28 und die zweite Ebene 29 einen spitzen Winkel 30 miteinander einschließen. Um dies zu verdeutlichen, ist wiederum die erste Ebene 28 aus Fig. 28 auch in Fig. 27 eingetragen. Dieses Ausführungsbeispiel zeigt insbesondere in Fig. 28, dass die an den Unterseiten 23 ausgebildeten Aufstandsflächen 27 in einer schräg zur Stapelrichtung 2 angeordneten Ebene 32 verlaufen können. Dieser schräge Verlauf der Aufstandsflächen 27 ist günstigerweise, wie in Fig. 28 auch gezeigt, in einem Winkel ausgebildet, welcher den schräg verlaufenden Bereichen 26 der jeweiligen Oberseiten 22 der Seitenwandabschnitte 21 entspricht. Hierdurch liegen die Aufstandsflächen 27 satt und vollflächig auf den entsprechenden Bereichen 26 der Oberseiten 22 der darunter angeordneten Kiste 1 auf, sodass sich eine stabile Abstützung der aufeinandergestapelten Kisten 1 ergibt.

Dieses Ausführungsbeispiel gemäß der Fig. 25 bis 28 zeigt beispielhaft auch, dass in dem Fall, in dem auf der Unterseite 23 die über die jeweils benachbarten Bereiche 26 der Unterseite 23 überstehenden Aufstandsflächen 27 ausgebildet sind, die zu den Aufstandsflächen 27 jeweils benachbarten Bereiche 26 der Unterseite 23 in einer Ebene 33 verlaufen können, auf der die Stapelrichtung 2 normal angeordnet ist, siehe insbesondere Fig. 27.

Anhand der Fig. 29 und 30 wird nun noch eine Ausgestaltungsform der Erfindung beispielhaft gezeigt, bei der sowohl an den Oberseiten 22 als auch an den Unterseiten 23 entsprechende Aufstandsflächen 25 und 27 ausgebildet sind. Fig. 27 zeigt analog zu Fig. 6 dabei wieder die Situation in einem Schnitt durch die Seitenwände 21 der aufeinandergestapelten Kisten 1 außerhalb der Bereiche der Aufstandsflächen 25 und 27. In diesen Bereichen ergibt sich wiederum die beabstandete Anordnung und damit der die Trocknung unterstützende Luftspalt zwischen den Unterseiten 23 der jeweils oberen Kiste 1 und den schräg geneigten Bereichen 24 auf den Oberseiten 22 der Seitenwandabschnitte 21 der darunter angeordneten Kiste 1. Für den Winkel 30 zwischen der ersten Ebene 28 und der zweiten Ebene 29 ergibt sich, wie in Fig. 29 dargestellt, wiederum dasselbe wie in den beiden anderen vorab geschilderten Ausführungsbeispielen.

In dem Schnitt durch die Aufstandsflächen 25 und 27 gemäß Fig. 30 ist gut zu sehen, dass diese vollflächig aufeinander aufliegen, sodass sich eine stabile Abstützung der Kisten 1 aufeinander ergibt. In dieser Variante ist wiederum vorgesehen, dass die an den Oberseiten 22 ausgebildeten Aufstandsflächen 25 in einer normal zur Stapelrichtung 2 angeordneten Ebene 31 verlaufen. Dieses Ausführungsbeispiel zeigt beispielhaft, dass aber auch die an den Unterseiten 23 ausgebildeten Aufstandsflächen 27 in einer normal zur Stapelrichtung 2 angeordneten Ebene 31 verlaufen können.

Die Größen der Aufstandsflächen 25 und 27 sowie ihr Verhältnis zu den restlichen Flächen der Oberseiten 22 bzw. Unterseiten 23 der Seitenwandabschnitte 21 können grundsätzlich gemäß der zu erwartenden bzw. zu erzielenden Lastanforderungen entsprechend eingestellt werden. Günstig ist allerdings, wenn ein Verhältnis zwischen der Summe der Flächen aller Aufstandsflächen 25 auf den Oberseiten 22 aller Seitenwandabschnitte 21 der Kiste 1 einerseits und der Gesamtfläche der Oberseiten der Seitenwand 4 der Kiste 1 andererseits in einem Bereich von 1:5 bis 1:15, vorzugsweise 1:9 bis 1:11, liegt. Gleiches gilt günstigerweise, wenn die Aufstandsflächen 27 auf den Unterseiten 23 der Seitenwände 4 angeordnet sind. Es gilt dann bevorzugt, dass ein Verhältnis zwischen der Summe der Flächen aller Aufstandsflächen 27 auf den Unterseiten 23 aller Seitenwandabschnitte 21 der Kiste 1 einerseits und der Gesamtfläche der Unterseiten 23 der Seitenwand 4 der Kiste 1 andererseits in einem Bereich von 1:5 bis 1:15, vorzugsweise von 1:9 bis 1:11, liegt. In absoluten Zahlen ist günstigerweise vorgesehen, dass die jeweilige Aufstandsfläche 25 bzw. 27 eine Fläche im Bereich von 75 mm² bis 175 mm², vorzugsweise von 120 mm² bis 135 mm², aufweist.

Bezogen auf die obere, insbesondere ebene, Begrenzungsfläche 17 des Bodens 3, welche den Aufnahmeraum 5 begrenzt, ist günstigerweise vorgesehen, dass ein Verhältnis zwischen der Summe der Flächen aller Aufstandsflächen 25 bzw. 27 auf den Oberseiten 22 und/oder den Unterseiten 23 aller Seitenwandabschnitte 21 der Kiste 1 einerseits und der Gesamtfläche der oberen Begrenzungsfläche 17 des Bodens 3 der Kiste 1 andererseits in einem Bereich von 1:100 bis 1:130, vorzugsweise von 1:110 bis 1:115, liegt.

**Legende**

| zu den Hinweisziffern: | | | |
|---|---|---|---|
| 1 | Kiste | 29 | zweite Ebene |
| 2 | Stapelrichtung | 30 | spitzer Winkel |
| 3 | Boden | 31 | Ebene |
| 4 | Seitenwand | 32 | Ebene |
| 5 | Aufnahmeraum | 33 | Ebene |
| 6 | Greifeinrichtung | 34 | Freistellung |
| 7 | Längserstreckungsrichtung | 35 | Einschnürungsbereich |
| 8 | Kanal | | |
| 9 | Eintrittsöffnung | | |
| 10 | Austrittsöffnung | | |
| 11 | Kanalbegrenzungswand | | |
| 12 | Kanalinnenhohlraum | | |
| 13 | Schnittebene | | |
| 14 | Umfangswinkel | | |
| 15 | Höhenerstreckung | | |
| 16 | Eckbereich | | |
| 17 | obere Begrenzungsfläche | | |
| 18 | Hinterschnitt | | |
| 19 | Ausrichtungsfläche | | |
| 20 | Riegel | | |
| 21 | Seitenwandabschnitt | | |
| 22 | Oberseite | | |
| 23 | Unterseite | | |
| 24 | schräg geneigter Bereich | | |
| 25 | Aufstandsfläche | | |
| 26 | benachbarter Bereich | | |
| 27 | Aufstandsfläche | | |
| 28 | erste Ebene | | |

## Patentansprüche

1. Stapelbare Kiste (1) zur Aufnahme und zum Transport von Gegenständen und zum Aufeinanderstapeln in einer Stapelrichtung (2) mit zumindest einer anderen Kiste (1) gleichen Typs, wobei die Kiste (1) einen Boden (3) und eine, über den Boden (3) überstehende und zumindest bereichsweise, insbesondere vollständig, um den Boden (3) umlaufende Seitenwand (4) aufweist, wobei der Boden (3) und die Seitenwand (4) gemeinsam einen Aufnahmeraum (5) der Kiste (1) zur Aufnahme der Gegenstände begrenzen, wobei in der Seitenwand (4) zumindest zwei, voneinander distanziert angeordnete Adapter zum maschinellen Greifen der Kiste (1) mittels zumindest einer Greifeinrichtung (6) angeordnet sind, wobei die Adapter in der Seitenwand (4) jeweils als in einer, parallel zur Stapelrichtung (2) verlaufenden, Längserstreckungsrichtung (7) längs erstreckte Kanäle (8) ausgebildet sind, wobei die Kanäle (8) jeweils eine Eintrittsöffnung (9) und eine Austrittsöffnung (10) und dazwischen einen, von einer Kanalbegrenzungswand (11) der Kiste (1) begrenzten und in der jeweiligen Längserstreckungsrichtung (7) längs erstreckten, Kanalinnenhohlraum (12) zum Hindurchführen der Greifeinrichtung (6) durch die Eintrittsöffnung (9) und den Kanalinnenhohlraum (12) und die Austrittsöffnung (10) aufweisen, wobei in und/oder an der Kanalbegrenzungswand (11) des jeweiligen Kanals (8) zumindest ein Hinterschnitt (18) zur Ausbildung eines in Längserstreckungsrichtung (7) des Kanals (8) wirkenden Formschlusses mit der Greifeinrichtung (6) ausgebildet ist, **dadurch gekennzeichnet, dass** der Hinterschnitt (18) im Bereich der Austrittsöffnung (10) des jeweiligen Kanals (8) ausgebildet ist und im Bereich der Eintrittsöffnung (9) des jeweiligen Kanals (8) eine Freistellung (34) zum Einführen eines Riegels (20) der Greifeinrichtung (6) eingearbeitet ist, oder dass der Hinterschnitt (18) als Einschnürungsbereich (35) des Kanalinnenhohlraums (12) ausgebildet ist, wobei im Fall des Einschnürungsbereichs (35) der Kanalinnenhohlraum (12) durch zwei sich in dem Einschnürungsbereich (35) treffende Kegelstümpfe ausgebildet ist.

2. Kiste (1) nach Anspruch 1, **dadurch gekennzeichnet, dass** die Kanalbegrenzungswand (11) jeweils als ein Teilbereich der Seitenwand (4) ausgebildet ist und/oder dass die Kanalbegrenzungswand (11) den Kanalinnenhohlraum (12), insbesondere in einer Schnittebene (13) normal zur Stapelrichtung (2) gesehen, zumindest abschnittsweise über einen Umfangswinkel (14) von zumindest 180°, vorzugsweise umfangsgeschlossen, begrenzt und/oder dass in der Seitenwand (4) zumindest vier, vorzugsweise genau vier, Kanäle (8) angeordnet sind.

3. Kiste (1) nach Anspruch 1 oder 2, **dadurch gekennzeichnet, dass** die Seitenwand (4) im Bereich des jeweiligen Kanals (8) eine Höhenerstreckung (15) in einer Richtung parallel zur Stapelrichtung (2) aufweist und sich der Kanal (8) über zumindest 50%, vorzugsweise über zumindest 80%, dieser Höhenerstreckung (15) der Seitenwand (4) erstreckt.

4. Kiste (1) nach einem der Ansprüche 1 bis 3, **dadurch gekennzeichnet, dass** die Seitenwand (4) in einer Draufsicht auf die Kiste (1) eine rechteckige Grundform aufweist und die Kanäle (8) jeweils in Eckbereichen (16) dieser rechteckigen Grundform angeordnet sind.

5. Kiste (1) nach einem der Ansprüche 1 bis 4, **dadurch gekennzeichnet, dass** der Boden (3) eine obere, insbesondere ebene, Begrenzungsfläche (17) ausbildet, mit der er den Aufnahmeraum (5) begrenzt, wobei die Stapelrichtung (2) normal zur oberen Begrenzungsfläche (17) des Bodens (3) verläuft und/oder dass die Kiste (1), vorzugsweise vollkommen, frei von die jeweilige Eintrittsöffnung (9) und die jeweilige Austrittsöffnung (10) des jeweiligen Kanals (8) in seiner jeweiligen Längserstreckungsrichtung (7), insbesondere vollständig, verdeckenden Wandbereichen ist, sodass die Greifeinrichtung (6) ungehindert durch die Kanäle (8) der aufeinandergestapelten Kisten (1) hindurchgeführt werden kann.

6. Kiste (1) nach einem der Ansprüche 1 bis 5, **dadurch gekennzeichnet, dass** der Kanalinnenhohlraum (12) des jeweiligen Kanals (8) zumindest abschnittsweise, in einer Schnittebene (13) normal zur Stapelrichtung (2) gesehen, einen kreisrunden Querschnitt aufweist.

7. Kiste (1) nach einem der Ansprüche 1 bis 6, **dadurch gekennzeichnet, dass** an der Kiste (1), vorzugsweise keilförmig ausgebildete, Ausrichtungsflächen (19) zur miteinander fluchtenden Ausrichtung der Kanäle (8) von übereinandergestapelten Kisten (1) relativ zueinander ausgebildet sind.

8. Anordnung von aufeinandergestapelten Kisten (1) nach einem der Ansprüche 1 bis 7, **dadurch gekennzeichnet, dass** zumindest zwei der Kanäle (8) jeweils einer der Kisten (1) mit jeweils einem Kanal (8) der jeweils darunter und/oder darüber angeordneten Kiste (1) zum Hindurchführen der Greifeinrichtungen (6) fluchtend angeordnet sind.

9. Verfahren zum maschinellen Greifen von aufeinandergestapelten Kisten (1) nach einem der Ansprüche 1 bis 7, **dadurch gekennzeichnet, dass** zumindest zwei Greifeinrichtungen (6) jeweils durch die miteinander fluchtend angeordneten Kanäle (8) der aufeinandergestapelten Kisten (1) hindurchgeführt werden, wobei vorzugsweise vorgesehen ist, dass die Greifeinrichtungen (6) jeweils, vorzugsweise nur, in der untersten der gemeinsam zu greifenden, aufeinandergestapelten Kisten (1) form- und/oder reibschlüssig lösbar fixiert werden.

## Claims

1. A stackable box (1) for the receiving and for the transportation of objects and for the stacking up in a stacking direction (2) with at least one other box (1) of the same type, wherein the box (1) has a base (3) and a lateral wall (4) which projects beyond the base (3) and which encircles at least regions of the base (3), in particular the entire base (3), wherein the base (3) and the lateral wall (4) together bound a receiving space (5) of the box (1) for receiving the objects, wherein in the lateral wall (4) there are arranged at least two adaptors, arranged at a distance from one another, for the mechanical gripping of the box (1) by means of at least one gripping device (6), wherein the adaptors in the lateral wall (4) are in each case in the form of channels (8) which extend longitudinally in a longitudinal extension direction (7) running parallel to the stacking direction (2), wherein the channels (8) each have an entry opening (9) and an exit opening (10) and therebetween a channel inner cavity (12), which is bounded by a channel boundary wall (11) of the box (1), extends longitudinally in the respective longitudinal extension direction (7) and is for the guiding of the gripping device (6) through the entry opening (9) and the channel inner cavity (12) and the exit opening (10), wherein in and/or at the channel boundary wall (11) of the respective channel (8) there is formed at least one undercut (18) for the formation of a positive fit, acting in the longitudinal extension direction (7) of the channel (8), with the gripping device (6), **characterised in that** the undercut (18) is formed in the region of the exit opening (10) of the respective channel (8) and a clearance (34) for the introduction of a bolt (20) of the gripping device (6) is made in the region of the entry opening (9) of the respective channel (8), or **in that** the undercut (18) is in the form of a constriction region (35) of the channel inner cavity (12), wherein in the case of the constriction region (35), the channel inner cavity (12) is formed by two truncated cones meeting in the constriction region (35).

2. A box (1) according to claim 1, **characterised in that** the channel boundary wall (11) is in each case in the form of a partial region of the lateral wall (4) and/or **in that**, in particular when viewed in a section plane (13) perpendicular to the stacking direction (2), the channel boundary wall (11) bounds at least portions of the channel inner cavity (12) over a circumferential angle (14) of at least 180°, preferably bounds the channel inner cavity (12) in a circumferentially-closed manner, and/or **in that** at least four, preferably exactly four, channels (8) are arranged in the lateral wall (4).

3. A box (1) according to claim 1 or 2, **characterised in that** in the region of the respective channel (8), the lateral wall (4) has a vertical extension (15) in a direction parallel to the stacking direction (2), and the channel (8) extends over at least 50%, preferably over at least 80%, of this vertical.extension (15) of the lateral wall (4).

4. A box (1) according to any one of claims 1 to 3, **characterised in that** the lateral wall (4) has a rectangular basic form in a plan view of the box (1) and the channels (8) are each arranged in corner regions (16) of this rectangular basic form.

5. A box (1) according to any one of claims 1 to 4, **characterised in that** the base (3) forms an upper, in particular plane, boundary surface (17) with which it bounds the receiving space (5), wherein the stacking direction (2) runs perpendicular to the upper boundary surface (17) of the base (3) and/or **in that** the box (1) is, preferably completely, free of wall regions covering, in particularly entirely, the respective entry opening (9) and the respective exit opening (10) of the respective channel (8) in its respective longitudinal extension direction (7), so that the gripping device (6) can be guided in an unhindered manner through the channels (8) of the stacked up boxes (1).

6. A box (1) according to any one of claims 1 to 5, **characterised in that** at least portions of the channel inner cavity (12) of the respective channel (8) have a circular cross-section when viewed in a section plane (13) perpendicular to the stacking direction (2).

7. A box (1) according to any one of claims 1 to 6, **characterised in that** on the box (1) there are formed orientation surfaces (19), preferably wedge-shaped, for the aligned orientation relative to one another of the channels (8) of boxes (1) stacked one above the other.

8. An arrangement of stacked-up boxes (1) according to any one of claims 1 to 7, **characterised in that** for through guiding of the gripping devices (6), at least two of the channels (8) of in each case one of the boxes (1) are arranged in alignment with a respective channel (8) of the box (1) in each case arranged thereunder and/or thereabove.

9. A method of mechanical gripping of stacked-up boxes (1) according to any one of claims 1 to 7, **characterised in that** at least two gripping devices (6) are in each case guided through the channels (8), arranged in alignment with one another, of the stacked-up boxes (1), wherein it is preferably provided that the gripping devices (6) are in each case releasably fixed in a positive-locking and/or friction-locking manner in the lowermost of the stacked-up boxes (1) to be gripped jointly, preferably only in the lowermost of the stacked-up boxes (1) to be gripped jointly.

## Revendications

1. Caisse empilable (1) destinée à recevoir et à transporter des objets et à être empilée dans une direction d'empilage (2) avec au moins une autre caisse (1) du même type, la caisse (1) étant munie d'un fond (3) et d'une paroi latérale (4) dépassant du fond (3) et s'étendant au moins par zones, notamment entièrement, autour du fond (3), le fond (3) et la paroi latérale (4) délimitant ensemble un espace de réception (5) de la caisse (1) pour recevoir les objets, au moins deux adaptateurs étant disposés à distance l'un de l'autre dans la paroi latérale (4) pour la préhension mécanique de la caisse (1) au moyen d'au moins un dispositif de préhension (6), les adaptateurs étant conçus dans la paroi latérale (4) chacun sous la forme de canaux (8) s'étendant dans une direction d'extension longitudinale (7) parallèle à la direction d'empilage (2), les canaux (8) étant chacun dotés d'une ouverture d'entrée (9) et d'une ouverture de sortie (10) et, entre, d'une cavité intérieure de canal (12) délimitée par une paroi de délimitation de canal (11) de la caisse (1) et s'étendant longitudinalement dans la direction d'extension longitudinale (7) respective pour le passage du dispositif de préhension (6) à travers l'ouverture d'entrée (9) et la cavité intérieure de canal (12) et l'ouverture de sortie (10), au moins une contre-dépouille (18) étant réalisée dans et/ou sur la paroi de délimitation de canal (11) du canal (8) respectif pour former avec le dispositif de préhension (6) une liaison par complémentarité de forme agissant dans la direction d'extension longitudinale (7) du canal (8), **caractérisée en ce que** la contre-dépouille (18) est réalisée dans la zone de l'ouverture de sortie (10) du canal (8) respectif et un dégagement (34) est réalisée dans la zone de l'ouverture d'entrée (9) du canal (8) respectif pour l'introduction d'un verrou (20) du dispositif de préhension (6), ou **en ce que** la contre-dépouille (18) est réalisée sous la forme d'une zone de rétrécissement (35) de la cavité intérieure de canal(12), la cavité intérieure de canal (12) étant, dans le cas de la zone de rétrécissement (35), réalisée par deux troncs de cône se rencontrant dans la zone de rétrécissement (35).

2. Caisse (1) selon la revendication 1, **caractérisée en ce que** la paroi de délimitation de canal (11) est réalisée respectivement comme une zone partielle de la paroi latérale (4), et/ou **en ce que** la paroi de délimitation de canal (11) délimite la cavité intérieure de canal (12), en particulier considérée dans un plan de coupe (13) perpendiculaire à la direction d'empilement (2), au moins par sections par un angle périphérique (14) d'au moins 180°, de préférence en étant fermée sur le pourtour, et/ou **en ce qu'**au moins quatre canaux (8), de préférence exactement quatre canaux, sont disposés dans la paroi latérale (4).

3. Caisse (1) selon la revendication 1 ou 2, **caractérisée en ce que** la paroi latérale (4) présente, dans la zone du canal (8) respectif, une extension en hauteur (15) dans une direction parallèle à la direction d'empilage (2), et le canal (8) s'étend sur au moins 50 %, de préférence sur au moins 80 %, de cette extension en hauteur (15) de la paroi latérale (4).

4. Caisse (1) selon l'une des revendications 1 à 3, **caractérisée en ce que** la paroi latérale (4) présente, en vue de dessus de la caisse (1), une forme de base rectangulaire et les canaux (8) sont disposés chacun dans des zones de coin (16) de cette forme de base rectangulaire.

5. Caisse (1) selon l'une des revendications 1 à 4, **caractérisée en ce que** le fond (3) forme une surface de délimitation supérieure (17), en particulier plane, par laquelle il délimite l'espace de réception (5), la direction d'empilage (2) s'étendant perpendiculairement à la surface de délimitation supérieure (17) du fond (3), et/ou **en ce que** la caisse (1) est dépourvue, de préférence entièrement, de zones de paroi recouvrant, en particulier complètement, l'ouverture d'entrée (9) respective et l'ouverture de sortie (10) respective du canal (8) respectif dans sa direction d'extension longitudinale (7) respective, de sorte que le dispositif de préhension (6) peut être guidé sans obstacle à travers les canaux (8) des caisses (1) empilées les unes sur les autres.

6. Caisse (1) selon l'une des revendications 1 à 5, **caractérisée en ce que** la cavité intérieure de canal (12) du canal (8) respectif est munie, au moins par sections, d'une section transversale circulaire, considérée dans un plan de coupe (13) normal à la direction d'empilement (2).

7. Caisse (1) selon l'une des revendications 1 à 6, **caractérisée en ce que** des surfaces d'alignement (19), de préférence en forme de coin, sont formées sur la caisse (1) pour aligner les canaux (8) de caisses (1) empilées les unes sur les autres.

8. Agencement de caisses (1) selon l'une des revendications 1 à 7 empilées les unes sur les autres, **caractérisé en ce qu'**au moins deux des canaux (8) d'une des caisses (1) sont disposés en alignement avec un canal (8) de la caisse (1) disposée respectivement en dessous et/ou au-dessus pour le passage des dispositifs de préhension (6).

9. Procédé de préhension mécanique de caisses (1) selon l'une des revendications 1 à 7 empilées les unes sur les autres, **caractérisé en ce qu'**au moins deux dispositifs de préhension (6) sont guidés chacun à travers les canaux (8) alignés les uns avec les autres des caisses (1) empilées les unes sur les autres, de préférence en prévoyant de fixer dispositifs de préhension (6) de manière réversible par engagement positif et/ou par friction dans, de préférence uniquement, la plus basse des caisses (1) empilées les unes sur les autres et à saisir ensemble.
